# EUROPÄISCHE PATENTANMELDUNG

(11) **EP 4 732 666 A1**
(43) Veröffentlichungstag der Anmeldung: **29.04.2026**
(21) Anmeldenummer: 24208578.5
(22) Anmeldetag: 24.10.2024
(51) Int. Cl.: A01K 1/015

(54) **TIEREINSTREU ZUR VERWENDUNG IN DER TIERHALTUNG**

(71) Anmelder: Johannes Brandenburg GmbH & Co. KG, 49424 Goldenstedt (DE)
(72) Erfinder:
(74) Vertreter: Dantz, Jan Henning

(57) **Zusammenfassung**

Tiereinstreu zur Verwendung in der Tierhaltung, die Holzmehl, Getreidemehl und Gelbildner umfasst. Das Getreidemehl ist ein Getreidenachmehl.

## Beschreibung

Die vorliegende Erfindung betrifft eine Tiereinstreu zur Verwendung in der Tierhaltung, die Holzmehl, Getreidemehl und Gelbildner umfasst oder daraus besteht.

Tiereinstreu ist Einstreu, die in der Tierhaltung unter anderem dazu genutzt wird, Ausscheidungen der Tiere aufzunehmen, um diese einfacher entfernen zu können. Insbesondere in der Haltung von Katzen wird Tiereinstreu, meist in Behältern, bereitgestellt. Es gibt insbesondere für Katzen klumpende Einstreuprodukte, bei denen der Einstreu Bentonit beigemischt wird, sodass sie verklumpt, wenn sie in Kontakt mit Ausscheidungen des Tiers kommt. Dies führt zu einer effizienteren Verwendung der Einstreu, beziehungsweise Katzenstreu, da so kontaminierte Teile der Einstreu gezielt entfernt werden können, was die Notwendigkeit für einen Austausch der gesamten Einstreu erheblich reduziert. Das Bentonit reduziert jedoch die Umweltverträglichkeit der Einstreu.

Um biologisch abbaubare klumpende Tiereinstreu für Katzen zu schaffen, kann das Bentonit durch Getreidemehl ersetzt werden, das aufgrund seines hohen Stärkegehalts von üblicherweise (deutlich) mehr als 60 Gew.-% ebenso dazu in der Lage ist, Flüssigkeit effektiv zu absorbieren. EP 3 364 750 B1 offenbart eine solche Einstreu für die Tierhaltung, die Getreidemehl umfasst. Zur Beschleunigung der Verklumpung wird außerdem ein Gelbildner eingesetzt, dessen Anteil allerdings auf 0,1 Gew.-% bis 4 Gew.-% beschränkt ist, um die Klebrigkeit der Einstreu zu beschränken.

Der wesentliche Nachteil des Einsatzes von Getreidemehl für Katzenstreu besteht zum einen darin, dass eigentlich als Nahrungsmittel verwertbare Rohstoffe dem entsprechenden Markt entzogen werden und zum anderen darin, dass es relativ teuer in der Anschaffung ist, insbesondere im Vergleich zu Bentonit.

Der vorliegenden Erfindung liegt entsprechend die Aufgabe zu Grunde, eine umweltfreundliche, kostengünstigere Alternative zu Getreidemehl für die Herstellung klumpender Katzenstreu zu finden.

Die vorliegende Erfindung löst dieses Problem mit einer Tiereinstreu mit den Merkmalen des Anspruchs 1 und einer Verwendung der Tiereinstreu nach Anspruch 15.

Erfindungsgemäß umfasst die Tiereinstreu zur Verwendung in der Tierhaltung Holzmehl, Getreidemehl und Gelbildner oder besteht daraus. Das Getreidemehl der vorliegenden Erfindung ist ein Getreidenachmehl, was dazu führt, dass die Katzenstreu kostengünstig und gleichzeitig besonders effizient, beziehungsweise resourcenschonend hergestellt werden kann.

Getreidenachmehl ist ein Mühlennachprodukt, dass neben dem eigentlichen Getreidemehl bei der Mehlproduktion anfällt, bei dem es sich also im Grunde genommen um ein Abfallprodukt handelt. Der nach dem Ausmahlen des Getreidekorns übrigbleibende Teil des Korns umfasst neben anderen Nachprodukten das Getreidenachmehl, dies ist beispielsweise in "Nebenerzeugnisse der Mehlmüllerei Ergebnisse eines Projektes zur Untersuchung des Futterwertes von Mühlennachprodukten", Bayerische Landesanstalt für Landwirtschaft, Juli 2012, Kastner AG, Wolznach, DE, beschrieben. Mehltypen werden üblicherweise nach DIN 10355, in der aktuellen Fassung nach DIN 10355:2017-11, mit Typen bezeichnet, die sich auf den Mineralstoffgehalt des Mehls beziehen, insbesondere bei handelsüblichen feineren Mehlsorten, wie Typ 405 oder 550 ist der Ausmahlgrad des Getreidekorns relativ gering, was zu hohen Überresten, also größeren Mengen an Getreidenachmehl führt, die entsorgt oder bevorzugterweise anderweitig verwertet werden müssen. Getreidenachmehl kann zwar in der Tierfutterproduktion eingesetzt werden, allerdings besteht nach wie vor das Problem geeignete Einsatzzwecke für Getreidenachmehl zu finden. Die vorliegende Erfindung löst somit auch dieses Problem.

Vorzugsweise besteht die Tiereinstreu zu 2 Gew.-% bis 98 Gew.-%, insbesondere zu 25 % bis 95 % aus dem Getreidenachmehl. Hierdurch kann die Tiereinstreu eine besonders gute Feuchtigkeitsaufnahmefähigkeit aufweisen.

Das Getreidenachmehl kann für eine besonders vorteilhafte Verklumpung der Einstreu, wenn diese beispielsweise mit Ausscheidungen von Katzen in Kontakt kommt, beispielsweise einen Stärkegehalt von mindestens 44 % Gew.-% bis maximal 58 Gew.-% und bevorzugt von 52 Gew.-% bis 56 Gew.-% aufweisen. Ein Rohfasergehalt des Getreidenachmehls kann beispielsweise zwischen 1,5 % und 3,5 %, bevorzugt zwischen 2 % und 2,5 % liegen.

Um den geringeren Stärkegehalt des Nachmehls im Vergleich zu Getreidemehl auszugleichen, der zu geringerer Feuchtigkeitsaufnahmefähigkeit der Einstreu führt, kann die Einstreu zu mindestens 3 Gew.-%, bevorzugt zu mindestens 5 Gew.-% aus Gelbildner bestehen. Gegenüber dem Stand der Technik ist dies unproblematisch, da der Gesamtgehalt klebriger Substanz aufgrund des verringerten Stärkegehalts des Getreidenachmehls im Vergleich zu reinem Getreidemehl trotzdem reduziert bleibt.

Vorzugsweise kann das Getreidenachmehl nach DIN 10355:2017-11 etwa einem Mehl-Typ 1600, 1700, 1740, 1800 oder 2000, besonders bevorzugt 1800 oder 2000 entsprechen. Das Getreidenachmehl kann bevorzugt ein Weizennachmehl sein, andere Getreidenachmehlsorten, wie Roggen, Gerste, Mais oder Reis sind allerdings auch denkbar. Die Herstellung des Getreidenachmehls kann hierbei beispielsweise ein Entfernen eines Anteils eines Getreidemehltyps, beispielweise eines reineren Typs 405, 550 oder 812 nach DIN 10355:2017-11, aus einer Masse gemahlenen Getreides umfassen.

Bei dem Holzmehl kann es sich um Nadelholzmehl handeln. Das Holzmehl ist besonders bevorzugt ein Fichten- und/oder Kiefernholzmehl, beispielsweise mit einer Partikelgröße von weniger als etwa 1,25 mm, zu bevorzugt 99 Gew.-%. Das Holzmehl kann beispielsweise durch Zermahlen oder Zerfasern von Holz gewonnen werden und/oder als Nebenprodukt beim Schleifen und/oder Sägen/Schneiden von Holz anfallen.

Gemäß einer besonders umweltschonenden Ausführung der Einstreu kann der der Gelbildner Tapioka (beziehungsweise Tapiokastärke), Carboxymethylcellulose, Carboxymethylstärke und/oder Guaran umfassen oder sein. Tapioka oder Tapioka und Carboxymethylstärke sind einfach verfügbar und folglich besonders bevorzugt als Geldbildner eingesetzt. In einer Variante kann der Gelbildner beispielhaft zu 40 Gew.-% bis 90 Gew.-% aus Tapioka oder Guaran und zu 10 Gew.-% bis 60 Gew.-% aus Carboxymethylcellulose oder Carboxymethylstärke bestehen.

Die Tiereinstreu kann in einer bevorzugten Ausführungsform für eine besonders hohe Feuchtigkeitsabsorptionsgeschwindigkeit der Einstreu von 1 Gew.-% bis 4 Gew.-% des Holzmehls, von 90 Gew.-% bis 98 Gew.-% des Getreidenachmehls und von 2 Gew.-% bis 7 Gew.-% des Gelbildners umfassen oder daraus bestehen. Durch den so erreichten Stärkegehalt der Einstreu kann sie Flüssigkeiten besonders schnell aufnehmen, was dazu führt, dass nach dem Kontakt mit Ausscheidungen eines Tiers, insbesondere einer Katze, ein besonders geringer Anteil der Einstreu entfernt werden muss, was gleichzeitig in einem besonders geringen Verbrauch von Einstreu resultiert. Die Tiereinstreu kann so bei allen Ausführungsformen, beispielsweise in einem Behälter mit den Dimensionen 455 mm x 340 mm x 120 mm (Breite x Tiefe x Höhe), der gleichmäßig, vollständig, mit Katzenstreu gefüllt ist, nur maximal 6 cm tief verklumpen (dies entspricht einer Klumptiefe der Tiereinstreu, wobei eine niedrige Klumptiefe einem vorteilhaften, geringeren Verbrauch der Einstreu entspricht), wenn mit einer Spritze 20 ml Wasser auf eine Stelle der Tiereinstreu gegeben werden und dieses Wasser 5 Minuten lang eingewirkt ist. Diese Klumptiefe entspricht hierbei der Tiefe, beziehungsweise der Höhe des Klumpens in vertikaler Richtung zur Oberfläche, beziehungsweise zum Boden des Behälters, wobei diese Dimensionierung auch nach Entfernen des Klumpens aus dem Behälter gemessen sein kann. Noch bevorzugter besteht die Tiereinstreu dieser Ausführungsform zu 1,5 Gew.-% bis 2,5 Gew.-% aus dem Holzmehl, zu 94 Gew.-% bis 96 Gew.-% aus dem Getreidenachmehl und zu 2,5 Gew.-% bis 3,5 Gew.-% aus dem Gelbildner und am bevorzugtesten besteht die Tiereinstreu zu 2 Gew.-% aus dem Holzmehl, zu 95 Gew.-% aus dem Getreidenachmehl und zu 3 Gew.-% aus Tapioka oder Guaran oder die Tiereinstreu besteht zu 2 Gew.-% aus dem Holzmehl, zu 92,5 Gew.-% aus dem Getreidenachmehl und zu 5,5 Gew.-% aus dem Gelbildner. So können entsprechend Klumptiefen von weniger als 4 cm erreicht werden.

Gemäß einer weiteren bevorzugten, zweiten, Ausführungsform kann die Tiereinstreu für eine besonders geringe Schüttdichte, die hier jeweils nach der Norm DIN EN ISO 60:2023-12 bestimmbar ist, von weniger als 410 g/L, bevorzugt weniger als 400 g/L zu 25 Gew.-% bis 90 Gew.-% aus dem Holzmehl, zu 5 Gew.-% bis 70 Gew.-% aus dem Getreidenachmehl und zu 1 Gew.-% bis 10 Gew.-% aus dem Gelbildner bestehen. Für eine besonders kostengünstige Ausführung kann die Tiereinstreu zu 87,5 Gew.-% aus dem Holzmehl, zu 10 Gew.-% aus dem Getreidenachmehl und zu 2,5 Gew.-% aus dem Gelbildner bestehen.

Besonders bevorzugt besteht die Tiereinstreu der zweiten Ausführungsform zu 60 Gew.-% bis 64 Gew.-% aus dem Holzmehl, zu 29 Gew.-% bis 33 Gew.-% aus dem Getreidenachmehl und zu 6 Gew.-% bis 8 Gew.-% aus dem Gelbildner. Auf diese Weise kann eine maximale Schüttdichte der Einstreu von weniger als 360 g/L erreicht werden, was insbesondere für Transport und spätere Entsorgung der Einstreu vorteilhaft ist. Am bevorzugtesten besteht die Tiereinstreu für eine Schüttdichte von etwa oder etwas mehr als 350 g/L zu 62 Gew.-% aus dem Holzmehl, zu 31 Gew.-% aus dem Getreidenachmehl und zu 7 Gew.-% aus dem Gelbildner. Der Gelbildner kann in diesen Varianten zu 82 Gew.-% bis 100 Gew.-%, bevorzugt zu 85 %, aus Tapioka (T) oder Guaran (G) und ansonsten aus Carboxymethylstärke (C) bestehen (TIG+C), wobei Tapioka oder Guaran plus so bis zu 18 Gew.-% enthaltene Carboxymethylstärke immer 100 Gew.-% des Gelbildners ausmachen. Beispielhaft kann die bevorzugteste Tiereinstreu dieser Ausführungsform zu 62 Gew.-% aus dem Holzmehl, zu 31 Gew.-% aus dem Getreidenachmehl, zu 6 Gew.-% aus Tapioka oder Guaran und zu 1 Gew.-% aus Carboxymethylstärke bestehen.

Vorzugsweise beträgt die Schüttdichte der Tiereinstreu, nach der Norm DIN EN ISO 60:2023-12 berechnet, mindestens 340 g/L und weniger als 410 g/L, bevorzugt zwischen 350 g/L und 400 g/L. Die Schüttdichte kann noch bevorzugter zwischen 350 g/L und 360 g/L betragen.

Die Tiereinstreu ist für eine einfache Entsorgung besonders bevorzugt eine klumpende Einstreu.

Vorzugsweise ist die Tiereinstreu ein Granulat, was für eine verbesserte Aufnahmefähigkeit von Feuchtigkeit vorteilhaft ist. Die Tiereinstreu kann beispielsweise eine granulatförmige klumpende, beziehungsweise klumpbare, Tiereinstreu, insbesondere für Katzen oder Kleintiere sein.

Das Granulat kann insbesondere eine Korngröße von 1 mm bis 10 mm, vorzugsweise von weniger als 5 mm aufweisen. Besonders bevorzugt weisen mindestens 40 Gew.-% des Granulats eine Korngröße von weniger als 1 mm auf.

Die vorliegende Erfindung umfasst außerdem die Verwendung der oben beschriebenen Tiereinstreu, insbesondere als die erwähnte klumpende Katzenstreu.

Alle oben gemachten Angaben in Gew.-% umfassen bevorzugt eine Fehlergrenze von 0,1 Gew.-%, Varianten unterhalb einer Fehlergrenze von 0,5 Gew.-% sind für eine vereinfachte Herstellung der Einstreu als optionale Variante aber ebenfalls von der vorliegenden Erfindung umfasst, wobei die Bestandteile der Einstreu zusammengerechnet allerdings immer nur maximal 100 Gew.-% ausmachen dürfen. Die Begriffe Einstreu und Tiereinstreu werden im Zusammenhang mit der vorliegenden Erfindung synonym verwendet.

## Patentansprüche

1. Tiereinstreu zur Verwendung in der Tierhaltung, die folgende Bestandteile aufweist oder daraus besteht:
a. Holzmehl;
b. Getreidemehl;
c. Gelbildner;
**dadurch gekennzeichnet, dass** das Getreidemehl ein Getreidenachmehl ist.

2. Tiereinstreu nach Anspruch 1, **dadurch gekennzeichnet, dass** die Tiereinstreu zu 2 Gew.-% bis 98 Gew.-%, bevorzugt zu 25 % bis 95 % aus dem Getreidenachmehl besteht.

3. Tiereinstreu nach Anspruch 1 oder 2, **dadurch gekennzeichnet, dass** das Getreidenachmehl einen Stärkegehalt von mindestens 44 % Gew.-% bis maximal 58 Gew.-% und bevorzugt von 52 Gew.-% bis 56 Gew.-% aufweist.

4. Tiereinstreu nach einem der vorgehenden Ansprüche, **dadurch gekennzeichnet, dass** die Tiereinstreu zu mindestens 3 Gew.-%, bevorzugt zu mindestens 5 Gew.-% aus Gelbildner besteht.

5. Tiereinstreu nach einem der vorgehenden Ansprüche, **dadurch gekennzeichnet, dass** das Getreidenachmehl etwa einem Mehl-Typ 1600, 1700, 1740, 1800 oder 2000, besonders bevorzugt 1800 oder 2000, nach DIN 10355:2017-11 entspricht.

6. Tiereinstreu einem der vorgehenden Ansprüche, **dadurch gekennzeichnet, dass** der Gelbildner Tapioka, Carboxymethylcellulose, Carboxymethylstärke und/oder Guaran umfasst oder ist.

7. Tiereinstreu nach Anspruch 6, **dadurch gekennzeichnet, dass** der Gelbildner zu 40 Gew.-% bis 90 Gew.-% aus Tapioka oder Guaran und zu 10 Gew.-% bis 60 Gew.-% aus Carboxymethylcellulose oder Carboxymethylstärke besteht.

8. Tiereinstreu nach einem der vorgehenden Ansprüche, **dadurch gekennzeichnet, dass** die Tiereinstreu von 1 Gew.-% bis 4 Gew.-% des Holzmehls, von 90 Gew.-% bis 98 Gew.-% des Getreidenachmehls und von 2 Gew.-% bis 7 Gew.-% des Gelbildners umfasst oder daraus besteht.

9. Tiereinstreu nach Anspruch 8, **dadurch gekennzeichnet, dass** die Tiereinstreu zu 1,5 Gew.-% bis 2,5 Gew.-% aus dem Holzmehl, zu 94 Gew.-% bis 96 Gew.-% aus dem Getreidenachmehl und zu 2,5 Gew.-% bis 3,5 Gew.-% aus dem Gelbildner besteht.

10. Tiereinstreu nach einem der Ansprüche 1 bis 7, **dadurch gekennzeichnet, dass** die Tiereinstreu zu 25 Gew.-% bis 90 Gew.-% aus dem Holzmehl, zu 5 Gew.-% bis 70 Gew.-% aus dem Getreidenachmehl und zu 1 Gew.-% bis 10 Gew.-% aus dem Gelbildner besteht.

11. Tiereinstreu nach Anspruch 10, **dadurch gekennzeichnet, dass** die Tiereinstreu zu 60 Gew.-% bis 64 Gew.-% aus dem Holzmehl, zu 29 Gew.-% bis 33 Gew.-% aus dem Getreidenachmehl und zu 6 Gew.-% bis 8 Gew.-% aus dem Gelbildner besteht.

12. Tiereinstreu nach einem der vorgehenden Ansprüche, **dadurch gekennzeichnet, dass** eine Schüttdichte der Tiereinstreu von 340 g/L bis 410 g/L, bevorzugt von 350 g/L bis 400 g/L und noch bevorzugter von 350 g/L bis 360 g/L beträgt.

13. Tiereinstreu nach einem der vorgehenden Ansprüche, **dadurch gekennzeichnet, dass** der Gelbildner zu 82 Gew.-% bis 100 Gew.-%, bevorzugt zu 85 %, aus Tapioka oder Guaran und ansonsten aus Carboxymethylstärke besteht, sodass Tapioka oder Guaran und Carboxymethylstärke immer 100 Gew.-% des Gelbildners ausmachen.

14. Tiereinstreu nach einem der vorgehenden Ansprüche, **dadurch gekennzeichnet, dass** die Tiereinstreu ein Granulat ist.

15. Verwendung der Tiereinstreu nach einem der vorgehenden Ansprüche als klumpende Katzenstreu.
